# EUROPEAN PATENT APPLICATION

(11) **EP 2 183 979 A2**
(43) Date of publication of application: **12.05.2010**
(21) Application number: 09013735.7
(22) Date of filing: 02.11.2009
(51) Int. Cl.: A23G 4/20

(54) **Chewing gum and method for manufacturing thereof**

(30) Priority: 07.11.2008 JP 2008287181
(71) Applicant: Cadbury Japan Limited, Shinagawa-ku Tokyo 141 8656 (JP)
(72) Inventor: Ishikawa, Eisuke, Tokyo 141 8586 (JP)
(74) Representative: Wilson Gunn

(57) **Abstract**

The present invention provides a chewing gum that has a superior balance in flavor and texture as a whole while maintaining characteristics of chewing gum and can be expected to lower a manufacturing cost, and a method for manufacturing the same.

A chewing gum of the present invention is manufactured by covering chocolate with a covering component containing a gum base so as to migrate oil contained in the chocolate into the covering component so that the chewing gum comprises a central part containing a chocolate-derived component and a covering part that covers the central part and contains the gum base and the oil.

Selected Drawing: FIG. 2

## Description

### TECHNICAL FIELD

The present invention relates to a chewing gum and a method for manufacturing thereof, more specifically to a chewing gum using a chocolate component and a method for manufacturing the same.

### BACKGROUND ART

Conventionally, a chewing gum using chocolate is known. In such a chewing gum, since there is a strong requirement for giving a chocolate flavor thereto, it is required to increase an amount of chocolate used. However, as the amount of chocolate used is increased, a gum base tends to soften and disappear in the oral cavity during mastication, in a shorter amount of time. This degrades an advantage of the chewing gum.

In order to address such a problem, Patent Document 1 discloses a chewing gum manufactured using an emulsifier composed of sucrose fatty acid ester in chocolate and a gum base. However, in such a technique, a large amount of emulsifier is required in order to sufficiently increase an amount of chocolate that is usable, which may result in a harsh bitter flavor.

Meanwhile, Patent Document 2 discloses a chewing gum in which a gum base of a predetermined composition is covered with chocolate. However, in such a technique, there is a concern that the chewing gum deforms during transportation and the chocolate sticks to a masticator's hand and the like, since chocolate is exposed. Although Patent Document 2 proposes sugarcoating of the chocolate in order to solve the problems, there is another problem of prolonged manufacturing process, since preparing the chocolate so as to be sugar-coatable requires a great amount of time.
Patent Document 1: Japanese Patent Publication No H3-47828
Patent Document 2: Pamphlet of WO2008/016940

### DISCLOSURE OF THE INVENTION

### Problems to be Solved by the Invention

Given this, the present inventors focused on a mode where chocolate is covered with a gum base. In this mode, if there is a large difference in texture between chocolate and a gum base, a masticator may have an unpleasant sensation inside the mouth.

The present invention is made in view of the abovementioned circumstances and aims at providing a chewing gum that has a superior balance in flavor and texture as a whole while maintaining characteristics of chewing gum and can be expected to lower a manufacturing cost, and a method for manufacturing the same.

### Means for Solving the Problems

The present inventors found that a difference in texture can be suppressed by migrating oil contained in chocolate into a gum base, thus leading to the completion of the present invention. More specifically, the present invention provides the following.

In a first aspect of the present invention, a chewing gum is manufactured by covering chocolate with a covering component containing a gum base so as to migrate oil contained in the chocolate into the covering component so that the chewing gum comprises a central part containing a chocolate-derived component and a covering part that covers the central part and contains the gum base and the oil.

According to the invention described in the first aspect, since the oil contained in the chocolate in the central part is migrated into the covering component, texture in the central part and the covering part become similar to each other, thereby improving balance in texture of the chewing gum as a whole.

Here, although the oil is migrated into the covering component, degree of dispersion thereof in the gum base is far lower than in a case of being kneaded with the gum base, thereby suppressing softening of the gum base in the oral cavity during mastication. As a result, characteristics of chewing gum can be maintained while increasing an amount of chocolate used without including a large amount of additive, which has a negative impact on a flavor, in the covering part.

In addition, if an excessive amount of oil is present in the central part, there is a concern of negative impact on appearance, texture, flavor and the like due to oil separation and the like. According to the present invention, content of oil in a chocolate component as a raw material can be configured to be high, since the oil migrates to the covering part. Thus, viscosity of the chocolate is suppressed to some extent and a torque required in a manufacturing device can be reduced. Furthermore, in a mode of disposing a sugarcoating in an outermost layer, if chocolate is used to cover a gum base as in the conventional mode, it takes a great amount of time to form a chocolate layer before starting forming the outermost layer. On the other hand, in the invention according to the first aspect in which the covering part is composed of a gum base, forming of the outermost layer such as a sugarcoating can be started immediately after covering the central part. A manufacturing cost can thus be expected to be lowered.

In a second aspect of the present invention, a chewing gum includes a central part containing a chocolate-derived component and a covering part that covers the central part and having a porous structure and containing gum base and oil.

According to the invention described in the second aspect, since the covering part is provided with the porous structure, oil in a chocolate component contained in the central part sufficiently migrates to the covering part. This can achieve at least a similar effect to that of the invention described in the first aspect.

According to a third aspect of the present invention, in the chewing gum as described in the first or the second aspect, the oil comprises non-tempering type fat as a main component.

Unlike in a case of disposing chocolate on the outside, tempering of the chocolate is practically impossible in a case where the chocolate is covered with a covering component as in the present invention. Therefore, if oil including fat requiring tempering as a main component is used, there is a concern that a problem such as fat bloom occurs in the central part.

According to the invention described in the third aspect, by using oil including non-tempering type fat as a main component, a problem such as fat bloom can be suppressed even if tempering is not possible, and texture and flavor can be further improved.

According to a fourth aspect of the present invention, in the chewing gum as described in any one of the first to the third aspects, the oil contains liquid or semi-solid fat at room temperature as a main component.

Since oil generally migrates at room temperature, oil composed of fat that is solid at room temperature practically does not migrate from the central part into the covering part. In addition, in a case where fat that is solid at room temperature is a main component of the chocolate component, a solid portion thereof may give an unpleasant sensation during mastication.
According to the invention described in the fourth aspect, oil including fat that is liquid or semi-solid at room temperature as a main component is used, and thus the oil sufficiently migrates from the central part into the covering part at room temperature. Furthermore, a liquid or semi-solid form gives far less unpleasant sensation during mastication than a solid form. This can sufficiently achieve the abovementioned effect.

According to a fifth aspect of the present invention, in the chewing gum as described in any one of the first to the fourth aspects, the oil content in the covering part is not greater than 10% by mass relative to the covering part as a whole.

As described above, although softening of the gum base in the oral cavity during mastication is suppressed, if content of oil in the covering part is too high, it is difficult to sufficiently suppress softening. If an additive is used for suppressing softening, there is a concern that flavor of the covering part deteriorates due to a large amount of additive contained therein.
According to the invention described in the fifth aspect, by making the oil content in the covering part not greater than 10% by mass relative to the covering part as a whole, the characteristics of chewing gum can be sufficiently maintained while suppressing an amount of an additive used.

In a sixth aspect of the present invention, a method for manufacturing a chewing gum using chocolate includes a process of covering chocolate with a covering component containing a gum base, and migrating oil contained in the chocolate into the covering component.

According to a seventh aspect of the present invention, in the method as described in the sixth aspect, the process of covering is performed so as to provide the gum base with a porous structure.

According to an eighth aspect of the present invention, in the method as described in the sixth or the seventh aspect, the oil includes non-tempering type fat as a main component.

According to a ninth aspect of the present invention, in the method as described in any one of the sixth to the eighth aspects, the oil includes liquid or semi-solid fat at room temperature as a main component

According to a tenth aspect of the present invention, in the method as described in any one of the sixth to the ninth aspects, a material containing oil of greater than 30% by mass is used as the chocolate.

According to the invention described in the tenth aspect, by using chocolate containing oil of greater than 30% by mass, viscosity of the chocolate can be lowered to some extent. This can reduce a torque required in a manufacturing device and a manufacturing cost thus can be expected to be lowered. As described above, even if chocolate containing a comparatively large amount of oil is used, the oil migrates to the covering part and is not likely to produce visible oil separation in the central part,

### Effects of the Invention

According to the present invention, since the oil contained in the chocolate in the central part is migrated into the covering component, texture in the central part and the covering part become similar to each other, thereby improving balance in texture of the chewing gum as a whole.

Here, although the oil is migrated into the covering part, degree of dispersion thereof in the gum base is far lower than in a case of being kneaded with the gum base, thereby suppressing softening of the gum base in the oral cavity during mastication. As a result, characteristics of chewing gum can be maintained while increasing an amount of chocolate used without using an additive, which has a negative impact on flavor.

In addition, if an excessive amount of oil is present in the central part, there is a concern of negative impact on texture, flavor and the like due to separation of components and the like. According to the present invention, content of oil in chocolate component as a raw material can be configured to be relatively high, since the oil migrates to the covering part. Thus, viscosity of the chocolate is suppressed to some extent and a torque required in a manufacturing device can be reduced. Furthermore, in a mode of disposing a sugarcoating in an outermost layer, if chocolate is used to cover a gum base as in the conventional mode, it takes a great amount of time to form a chocolate layer before starting forming the outermost layer. On the other hand, in the present invention in which the covering part is composed of a gum base, forming of the outermost layer such as a sugarcoating can be started immediately after covering the central part. A manufacturing cost can thus be expected to be lowered.

### PREFERRED MODE FOR CARRYING OUT THE INVENTION

Embodiment of the present invention is described hereinafter; however, the present invention is not limited thereto.

### Method for Manufacturing Chewing Gum

A method for manufacturing a chewing gum according to the present invention includes steps of: covering chocolate with a covering component containing a gum base; and migrating oil contained in the chocolate into the covering component. Texture in the central part and the covering part thus become similar to each other, thereby improving balance in texture of the chewing gum as a whole. Each of the steps is described in detail hereinafter.

Chocolate can be covered with a covering component according to, for example, Publication of U.S. Patent No. 6,280,780. More specifically, a rope having a layered structure in which a covering component is filled with chocolate is co-extruded and the rope is passed through a sizing mechanism provided with a pair of multiple (for example, seven-tiered) pulley-type roller members to form a thin rope of a desired thickness. Thereafter, the thin rope of gum material is controlled accordingly in traveling speed by a pair of roller members and cut into a desired size and shape in a pellet forming mechanism provided with a pair of rotating chain-die members rotating in a uniform velocity. A molded body (pellet), which is a predecessor of a chewing gum, is thus formed.

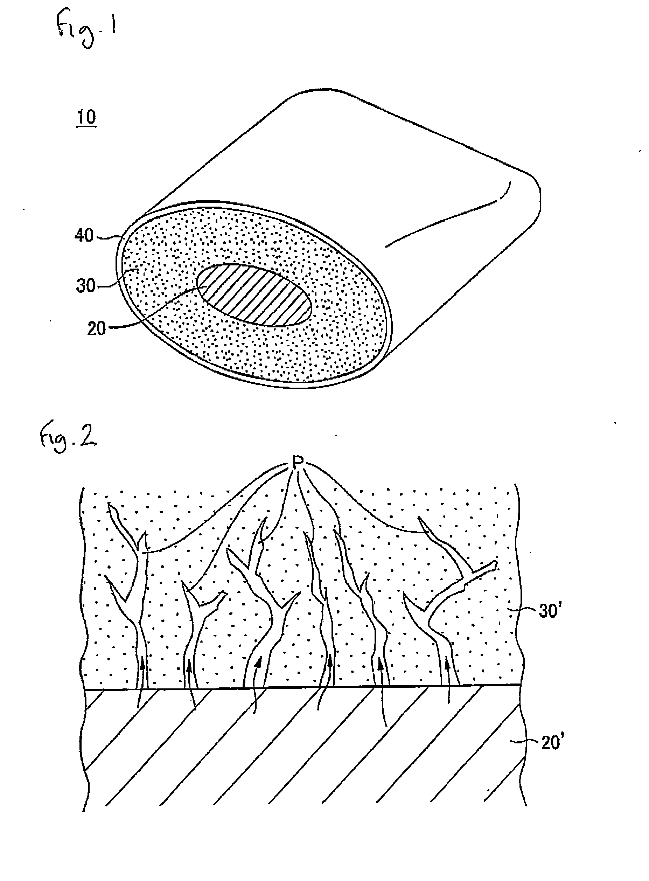

A covering method is not limited thereto and can also be performed by an arbitrary well-known process such as co-depositing and encrusting, preferably so as to provide a porous structure in a gum base constituting the molded body. As a result, oil contained in the chocolate in the central part of the molded body can easily migrate into the covering part through pores P in the porous structure (see FIG. 2), thereby further improving balance in texture of the chewing gum as a whole,

This is an eccentric idea that is counter to the conventional practice for a chewing gum manufactured by a CFP (center-filled pellet) method, where a composition and a method for eliminating pores have been devised and adopted so as to suppress leakage of a composition in a central part into a covering part. In a case where, as in the conventional practice, leakage of a composition in a central part is required to be suppressed, a gum base that is low in affinity with the chocolate component must be adopted; on the other hand, in the present invention where leakage is encouraged, a gum base of a wide range of well-known compositions can be used and therefore flexibility in design can be increased. As a non-limiting example, a gum base disclosed in Japanese Unexamined Patent Application Publication No. 2008-510491 can be used.

The porous structure can be formed either by extruding a gum base under a mild condition so as not to break pores included therein, and co-depositing or encrusting, or by-extending a rope cooled down to 40 to 50C to-generate innumerable fine cracks by increasing traveling speed by the pair of roller members provided immediately before the pellet forming mechanism, in a system disclosed in Publication of U.S. Patent No. 6,280,780. A specific porosity can be accordingly configured depending on a difference in oil content between chocolate and a gum base used, and is preferably no less than 5%, more preferably no less than 10%, and most preferably no less than 15%.

The covering component can contain an optional ingredient such as elastomer, a bulking agent (maltitol and the like), wax, an elastomer solvent, an emulsifier, a plasticiser, a filler and a mixture thereof. It should be noted that, the covering component must be configured so that the oil content thereof is lower than that of the chocolate component, in order to migrate the oil. Although not particularly limited, the oil content of the covering component is preferably no greater than 5% by mass and more preferably no greater than 2.5% by mass with respect to the covering component as a whole, in order to reduce manufacturing time by ensuring migrating speed of the oil, and to ensure sufficient formability in a manufacturing process.

The abovementioned covering component composed of the gum base and the optional ingredient can make up about 40 to 97% by mass and more preferably about 70 to 90% by mass of the chewing gum as a whole.

In general, "chocolate" indicates, according to class name definition in Chocolate Fair Competition Code (hereinafter referred to as Chocolate Code), a chocolate product or a chocolate-material containing no less than 60% chocolate material that is compliant with the standard for chocolate material, manufactured by a normal procedure using cacao mass, cocoa butter, cocoa cake or cocoa powder prepared from cacao beans as an ingredient, and adding sugar, dairy product, other edible oil and fat, flavor and the like thereto as necessary (Chocolate Code Article 2, Paragraph 3). However, the chocolate in the present specification is not limited to that defined in the abovementioned Code, and can include: quasi chocolate; chocolate sweet; quasi chocolate sweet; milk chocolate; quasi milk chocolate; pure chocolate; fresh cream chocolate; other oleaginous confectionery materials such as various oleaginous confectionery materials using, in place of or along with cocoa butter, tempering type fat or non-tempering type fat derived from animal, vegetable, and the both thereof or a mixture thereof; white chocolate obtained by not using cocoa butter or cacao mass but powdered whole milk, powdered skimmed milk and the like; colored chocolate of various flavors and colors using various flavorings such as fruits, coffee, green tea and the like; and an oleaginous confectionery such as ganache, cream and the like.

Unlike the prior art disposing such chocolate on the outside, tempering of the chocolate is practically impossible in a case where the chocolate is covered with a covering component as in the present invention. Therefore, if oil including fat requiring tempering as a main component is used, there is a concern that a problem such as fat bloom occurs in the central part. Consequently, the oil preferably contains non-tempering type fat as a main component. A problem such as fat bloom can thus be suppressed even if tempering is not possible, and texture and flavor can be further improved.

In the present specification, "contains non-tempering type fat as a main component" means that non-tempering fat makes up preferably no less than 50% by mass, more preferably no less than 75% by mass, and further preferably no less than 90% by mass of the oil as a whole, and does not exclude a case where tempering-type fat is contained therein.

A representative example of the non-tempering type fat includes trans acid type fat and lauric acid type fat. Trans acid type fat is obtained by trans-isomerizing a soft fraction of palm oil and the like or liquid oil such as soybean oil, and composed of triglyceride containing a relatively large amount of trans-fatty acid in constituent fatty acid thereof. Lauric acid type fat is obtained from oil and fat composed of glyceride containing a large amount of lauric acid group such as palm oil, palm kernel oil, babassu oil and the like, and fractions thereof, and composed of triglyceride containing a large amount of lauric acid in constituent fatty acid thereof. In addition, asymmetrical glyceride such as SSU type glyceride (saturated triglyceride in 1,2-position and unsaturated triglyceride in 3-position) can be used solely or in combination with SUS type glyceride (saturated triglyceride in 1,3-position and unsaturated triglyceride in 2-position) as the non-tempering type fat

As described later, since oil generally migrates at room temperature, oil composed of fat that is solid at room temperature practically does not migrate from the central part to the covering part. In addition, in a case where fat that is solid at room temperature is a main component of the chocolate, a solid portion thereof may give an unpleasant sensation during mastication. Consequently, the oil preferably contains liquid or semi-solid fat at room temperature as a main-component. As a result, the oil sufficiently migrates from the central part into the covering part at room temperature. Furthermore, a liquid or semi-solid form gives far less unpleasant sensation during mastication than a solid form. This can sufficiently achieve the abovementioned effect.

In the present specification, "contains liquid or semi-solid fat at room temperature as a main component" means that liquid or semi-solid fat at room temperature makes up preferably no less than 50% by mass, more preferably no less than 75% by mass, and further preferably no less than 90% by mass of the oil as a whole, and does not exclude a case where solid fat at room temperature (such as cocoa butter) is contained therein.

As the liquid or semi-solid fat at room temperature, though not limiting, palm kernel oil, butter oil, palm olein oil and the like can be exemplified.

The chocolate can contain an optional ingredient such as sugar, shortening, lecitin, an emulsifier, an alcoholic beverage, fruit juice, a flavoring agent and the like, and a mixture thereof. Particularly, by using the alcoholic beverage, fruit juice and the flavoring agent, flavor of the chewing gum as a whole can be improved since the abovementioned ingredients also migrate to the covering part along with the oil.

It should be noted that the oil content of the chocolate should be no less than 18% by mass, preferably no less than 30% by mass, more preferably no less than 35% by mass, and further preferably no less than 40% by mass. This can reduce a torque required in a manufacturing device (for example, a preparing device of liquid chocolate, a transportation device and an extruding device) and a manufacturing cost thus can be expected to be lowered. As described above, even if chocolate containing a comparatively large amount of oil is used, the oil migrates to the covering part and is not likely to produce visible oil separation in the central part.

The covering component can be further covered with an outermost layer. This can prevent deformation of the chewing gum during transportation and improve perceptibility thereof such as hand feeling and appearance. The outermost layer can be formed by a well-known method. A composition constituting the outermost layer can contain sorbitol, maltitol, xylitol, erythritol, isomalt, other crystallizable polyols, and sucrose.

In addition, the molded body can contain an additive such as an algefacient, a throat soothing agent, a spice, a warming agent, a tooth whitening agent, a halitosis deodorant, vitamins, minerals, caffeine, a drug and the like in an arbitrary portion thereof. A specific example thereof is not particularly limited and, for example, components disclosed in Japanese Translation of PCT International Publication, Publication No. 2008-510491 can be used.

The abovementioned molded body is made into a chewing gum as a final product by migrating the oil from the chocolate into the covering component. The migration is generally performed at room temperature and time required therefor varies according to the amount of oil contained in the chocolate and the covering component; however, is generally 3 to 7 days. The migration is almost completed in the time period, and destabilization in quality due to difference in a degree of migration can be prevented.

### Chewing Gum

The chewing gum according to the present invention, which is manufactured by the abovementioned method and the like, is described hereinafter. FIG 1 is a cross-sectional perspective view of a chewing gum 10 according to an embodiment of the present invention. The chewing gum 10 includes a central part 20 and a covering part 30 that covers the central part 20. The chewing gum 10 according to the present embodiment further includes an outermost later 40 that covers the covering part 30.

The central part 20 contains a chocolate-derived component. Here, the chocolate-derived component indicates a part of, or all of components generally contained in chocolate; more specifically components remained after migrating a part of, or all of components contained in chocolate used as a raw material into the covering part composed of a gum base and the like.

Here, the covering part 30 preferably has a porous structure. The covering part 30 having a porous structure indicates that, as shown in FIG 2, a part of or all of components contained in chocolate 20' used as a raw material has been sufficiently migrated to a covering part precursor 30' composed of a covering component.

In addition, as described above, the oil preferably contains non-tempering type fat or liquid or semi-solid fat at room temperature as a main component.

Although softening of the gum base in the oral cavity during mastication is suppressed, if content of oil in the covering part is too high, it is difficult to sufficiently suppress softening. If an additive is used for suppressing softening, there is a concern that flavor of the covering part deteriorates due to a large amount of additive contained therein. Consequently, the covering part 30 after the migration of oil preferably contains no greater than 10% by mass, more preferably no greater than 8% by mass of the oil with respect to the covering part as a whole. The characteristics of chewing gum can thus be sufficiently maintained, while suppressing an amount of an additive used.

From a standpoint of weight control, in order to reduce calorific value thereof, the chewing gum is preferably configured to be non-sugar, and more preferably configured to be sugarless. Here, "non-sugar" means that sugar content per 100 g of chewing gum is less than 5 g, and "sugarless" means that sugar content per 100 g of chewing gum is less than 0.5 g.

### EXAMPLES

### Examples 1 to 3

A chocolate of composition shown in Table 1 was prepared. As shown in Table 1, a proportion of oil in chocolate (cocoa butter (including cocoa butter contained in cocoa), palm olein oil, medium chain fatty acid oil, shortening, and butter oil) was 44.45% by mass.

**Table 1**

| | |
|---|---|
| Cocoa | 16.00 |
| Maltitol | 40.00 |
| Cocoa butter | 1.50 |
| Palm olein oil | 30.75 |
| medium chain fatty acid oil | 0.00 |
| Shortening | 9.33 |
| Butter oil | 1.33 |
| Lecitin | 0.61 |
| Emulsifier | 0.21 |
| Flavoring | 0.27 |
| Total | 100.00 |

(All figures are in percent by mass)

A covering component shown in Table 2 was prepared. As shown in Table 2, the covering component does substantially not contain oil.

**Table 2**

| | |
|---|---|
| Gum base | 28-42 |
| Lecitin | 0.25 |
| Maltitol | 52-55 |
| Flavoring | 2.50 |
| algefacient | 0.08 |
| acidulant | 1.2 |
| intense sweetener | 3.40 |

(All figures are in percent by mass)

A composition for forming an outermost layer shown in Table 3 was prepared.

**Table 3**

| | |
|---|---|
| Maltitol | 95.02 |
| Bleached gum arabic | 3.32 |
| titanium dioxide | 0.36 |
| Flavoring | 1.07 |
| algefacient | 0.08 |
| intense sweetener | 0.08 |
| Candelilla wax | 0.08 |

(All figures are in percent by mass)

The chocolate of the composition shown in Table 1 and the covering component of the composition shown in Table 2 were co-extruded, and then passed through a sizing mechanism provided with a pair of seven-tiered pulley-type roller members, thereby forming a thin rope having a desired thickness. Thereafter, traveling speed of the thin rope of a gum material was increased by a pair of roller members, and then the rope was introduced into a pellet forming mechanism provided with a pair of rotating chain-die members rotating in a uniform velocity and cut into a desired size and shape. Amount used of the chocolate and the covering component was as shown in Table 4.

A molded body was formed by spraying the composition for forming an outermost layer of the composition shown in Table 3 onto an outer surface of the pellet and then drying. The molded body was stored for a week at room temperature, thereby forming a chewing gum in which oil in the chocolate had been migrated into the covering part.

### Comparative Example 1

A chewing gum was prepared under the same conditions as in the Example 2, except for the covering component and the chocolate being kneaded in order to uniformly disperse the chocolate in the covering component.

### Comparative Example 2

0.7 g of the covering component shown in Table 2 was placed in a concave portion of a mortar, strongly compressed between the mortar and a convex shaped pestle, and formed into a bowl shape. Two bowl-shaped bodies were prepared by repeating the abovementioned step. One bowl-shaped body was placed inside a concave portion of a mortar having an approximate shape to a designed shape of a chewing gum, 0.2 g of chocolate in a melted state shown in Table 1 was placed in a center of the bowl-shaped body, and then other bowl-shaped body was placed thereon. A laminated body thus obtained was compressed by a concave portion of a pestle having an approximate shape to a designed shape of the chewing gum from above, edge portions of the bowl-shaped bodies were bonded with each other, thereby forming a molded body. The chewing gum was prepared by storing the molded body for a week at room temperature.

### Assessment 1

A sensory assessment of the chewing gums prepared in Examples 1 to 3 and Comparative Examples 1 and 2 was carried out by a professional panel for a degree of chocolate flavor (chocolate sensation), and a degree of melting and softening of a gum base during mastication (gum base softening). The result thereof is shown in Table 4.

**Table 4**

| | Example 1 | Example 2 | Example 3 | Example 4 |
|---|---|---|---|---|
| Covering componnt (g) | 1.4 | 1.4 | 1.4 | 1.4 |
| Chocolate (g) | 0.1 | 0.2 | 0.3 | 0.2 |
| Chocolate sensation | Moderate | Good | Good | Bad |
| Softening of gum base | Good | Good | Moderate | Bad |
| Total assessment | Moderate | Good | Moderate | Bad |

As shown in Table 4, the chewing gums of Examples 1 to 3 were superior to the chewing gum of Comparative Example 1 both in chocolate sensation and gum base softening.

Particularly, although amount of chocolate used in the chewing gum of Example 3 was far greater (1.5 times greater) than that of Comparative Example 1, softening of the gum base was suppressed. This proved that a structure in which a covering component containing a gum base covers chocolate is effective for maintaining characteristics of chewing gum.

Further, although amount of chocolate used in the chewing gum of Example 1 was far smaller (0.5 times greater) than that of Comparative Example 1, the chewing gum of Example 1 was superior in chocolate sensation. This proved that a structure in which a covering component containing a gum base covers chocolate is efficient for bringing out chocolate sensation.

### Assessment 2

Regarding the chewing gums of Examples 1 to 3 and Comparative Example 2, cross-section thereof was visually judged and texture thereof during mastication was assessed by a professional panel.

As a result, in the chewing gum of Comparative Example 2, the covering part was densely-packed and had a non-porous structure that did not allow oil in the chocolate to migrate thereinto, and a central part was in a liquid form in which oil separation was observed. In addition, there was a substantial difference in texture between the covering part and the central part in the chewing gum of Comparative Example 2, which gave a considerable unpleasant sensation. On the contrary, in the chewing gums of Examples 1 to 3, the covering part had a porous structure and the central part was in a semi-solid form in which oil separation was not observed. In addition, in the chewing gums of Examples 1 to 3, the covering part and the central part were very similar to each other in texture and gave no unpleasant sensation. The results described above proved that the covering part having a porous structure can suppress deterioration of appearance such as oil separation and improve balance in texture of the chewing gum as a whole.

### Examples 4 and 5

A chewing gum was prepared under the same conditions as in the Example 2, except for the chocolate of a composition shown in Table 5 being used.

**Table 5**

| | Example 4 | Example 5 |
|---|---|---|
| Cocoa | 16.00 | 16.00 |
| Maltitol | 40.00 | 40.00 |
| Cocoa butter | 1.50 | 32.25 |
| Palm olein oil | 0.00 | 0.00 |
| medium chain fatty acid oil | 30.57 | 0.00 |
| Shortening | 9.33 | 9.33 |
| Butter oil | 1.33 | 1.33 |
| Lecitin | 0.61 | 0.61 |
| Emulsifier | 0.21 | 0.21 |
| Flavoring | 0.45 | 0.27 |
| Total | 100.00 | 100.00 |

(All figures are in percent by mass)

### Assessment 2

Regarding the chewing gums of Examples 2, 4 and 5, cross-section thereof was visually judged for presence of a cocoa butter lump, and texture thereof during mastication was assessed by a professional panel.

As a result, a cocoa butter lump was not observed in the chewing gum of Example 2, and observed in the chewing gums of Examples 4 and 5. It is considered that, since oil containing fat that is low in compatibility with cocoa butter as a main component, such as medium chain fatty acid oil, was used in the chewing gum of Example 4, cocoa butter formed a lump separately from medium chain fatty acid oil. In addition, it is considered that, since oil containing tempering-type fat as a main component, such as cocoa butter, was used without tempering in the chewing gum of Example 5, the cocoa butter lump was formed. On the contrary, it is considered that, since oil containing non-tempering type fat as a main component, such as palm olein oil, was used in the chewing gum of Example 2, generation of the cocoa butter lump could be suppressed even without tempering. Further, regarding texture of the chewing gum, the chewing gum of Examples 4 and 5 was gave a slight unpleasant sensation and texture of the chewing gum of Example 2 gave no unpleasant sensation, as a reflection of the abovementioned results.

### BRIEF DESCRIPTION OF THE DRAWING

FIG. 1 is a cross-sectional view of a chewing gum according to an embodiment of the present invention; and
FIG 2 is an enlarged view of a main portion of a predecessor of the chewing gum of FIG 1.

### EXPLANATION OF REFERENCE NUMERALS

- 10: Chewing gum
- 20: Central part
- 30: Covering part
- 40: Outermost layer

## Claims

1. A chewing gum, manufactured by covering chocolate with a covering component containing a gum base so as to migrate oil contained in said chocolate into said covering component so that said chewing gum comprises a central part containing a chocolate-derived component and a covering part that covers the central part and contains said gum base and said oil.

2. A chewing gum comprising; a central part containing a chocolate-derived component and a covering part that covers said central part and having a porous structure and containing gum base and oil.

3. The chewing gum according to claim 1 or 2 wherein said oil comprises non-tempering type fat as a main component.

4. The chewing gum according to any one of claims 1 to 3 wherein said oil comprises liquid or semi-solid fat at room temperature as a main component.

5. The chewing gum according to any one of claims 1 to 4 wherein the oil content in said covering part is not greater than 10% by mass relative to said covering part as a whole.

6. A method for manufacturing a chewing gum using chocolate wherein said method comprises a process of covering chocolate with a covering component containing a gum base, and migrating oil contained in said chocolate into said covering component.

7. The method according to claim 6 wherein said process of covering is performed so as to provide said gum base with a porous structure.

8. The method according to claim 6 or 7, wherein said oil comprises non-tempering type fat as a main component.

9. The method according to any one of claims 6 to 8, wherein said oil comprises liquid or semi-solid fat at room temperature as a main component.

10. The method according to any one of claims 6 to 9, wherein a material containing oil of greater than 30% by mass is used as said chocolate.
